# EUROPEAN PATENT SPECIFICATION

(11) **EP 2 328 328 B1**
(45) Date of publication and mention of the grant of the patent: **09.05.2018**
(21) Application number: 10191960.3
(22) Date of filing: 19.11.2010
(51) Int. Cl.: H04L 29/08, G06Q 30/00, H04M 3/51

(54) **Method for determining response channel for a contact center from historic social media**
Verfahren zur Bestimmung des Antwortkanals für ein Kontaktzentrum aus historischen sozialen Mediendaten
Procédé de détermination du canal de réponse pour un centre de contacts à partir d'un contenu multimédia à caractère social historique

(30) Priority: 20.11.2009 US 263013 P; 11.02.2010 US 704244; 17.02.2010 US 707277
(43) Date of publication of application: 01.06.2011
(73) Proprietor: Avaya Inc., New Jersey, DE 07920-2332 (US)
(72) Inventor: Erhart, George, Loveland, Colorado 80538 (US); Skiba, David, Golden, Colorado 80403 (US); Matula, Valentine C., Granville, Ohio 43023 (US)
(74) Representative: Williams, David John

(56) References cited:
- US-A1- 2006 218 225
- US-B1- 7 197 470
- Fiveson K: "Integrating Social Media into Your Contact Center", American Teleservices Association Convention Expo 2009, New Orleans, 5 October 2009 (2009-10-05), pages 1-7, XP002626304, Retrieved from the Internet: URL:http://www.slideshare.net/kfiveson/int egrating-social-media-into-your-contact-ce nter [retrieved on 2011-03-04]

## Description

### CLAIM OF PRIORITY

This application claims priority to U.S. Provisional Application Serial No. 61/263,013, filed November 20, 2009, entitled "GEO POD SYSTEM", and is a continuation-in-part application of U.S. Application Serial No. 12/704,244, filed February 11, 2010, entitled "SOCIAL MEDIA CONTACT CENTER DIALOG SYSTEM", which are both incorporated herein by reference in their entirety.

### BACKGROUND

Contact centers generally exchange information with consumers through directed contacts. Directed contacts consist of emails, phone calls, or other forms of communication that are directed to the contact center. However, many people, today, exchange information or interact through non-direct methods. Non-direct communications require users to post communications to third parties but not to a specific person or organization. Non-direct methods include social media, which may include websites, networks, or other communication systems. Social media can include: blogs, micro-blogs, RSS feeds, social media websites (such as, Linked-In, Facebook, Twitter, MySpace), and other types of social media. Generally, it is not possible for contact centers to communicate with consumers through non-direct methods. As such, the contact centers may be unable to interact with consumers to offer certain types of customer service.

Further, attempting to interface with social media sites is very difficult for contact centers. The volume of data transferred in some social media sites, such as, Twitter, is extremely large. As such, it becomes difficult for the contact center to filter through all of the information to glean the most important posts and respond to those posts. Further, each social media site has different data structures and presents data differently using application-specific formats. As such, the contact center may be unable to use a simple system to exchange information. Further, it is difficult to correlate different social media messages or information received across different social media.

US 7,197,470 discloses a system and method for collecting and analyzing electronic discussion messages for a group of people. Messages from multiple users are collected on different discussion forums. The messages are analyzed to categorize the messages and identify trends and patterns in predetermined markets. US 2006/0218225 discloses a communications device with an interface to communicate with one or more other peer devices over a network, the ability to store data relevant to an interest of the user of the device and the identification information of the user of the device, the ability to browse the content stored on one or more other peer devices, and an interest manager circuit that groups the respective users into one or more interest groups. "Integrating Social Media into your Contact Center" by K. Fiveson discusses using social media for a company's contact center to aid customer service. It is recommended that companies use social media to stay abreast with consumers' opinions on service and brands.

Contact centers would like to be able to better target users of social media networks. Thus, understanding times, dates, and instances of usage for users' results can allow contact centers to better focus contact strategies. Unfortunately, there is no way, currently, of determining when a user may be on a social media network.

### SUMMARY

The invention provides a method according to claim 1.

It is with respect to the above issues and other problems that the embodiments presented herein were contemplated. Some social networks provide social media message histories that record information about previous posts that users make to the social media network. From this information, a contact center may determine trends in the usage of a social media network by a user. Thus, the contact center can mine the social media message history database for times, frequency of posts, location of the user during posts and other information provided in social media message histories. From this information or metadata about the social media message(s), the contact center develops trends about the user's postings of social media messages on social media networks. For example, the contact center can determine that the user typically posts to Twitter from 8 to 10 a.m. and then posts social media messages to Facebook from 3 to 4 in the afternoon. As such, a contact center may be better able to target communication with the user by posting social media messages to these different social media networks at those times.

The embodiments provided herein also are able to change or modify the trends based on current social media messages being posted by the user. As such, the contact center receives social media messages and determines if the identity of the user posting the social media message is one that is subject to a trend analysis. The contact center can take metadata or read the metadata associated with the social media message and modify the trend according to that metadata. Further, the contact center can store the metadata for on-going trend analysis.

A social media gateway can gather information on specific social network users. In the cases where the social media network user has a prior relationship with the enterprise, enterprise data may be consulted to find which social channels the user was or is a member of and retrieve the necessary access information. For example, Twitter does not require a prior relationship, but Facebook, Linkedln, etc. do require a prior friend or follower relationship to gain access to historical posting data. This trend analysis may also be extended to blogs to which the user might post and other user groups or forums of which they are a member. Access to calendar data may be through public postings of the user's Google Calendar.

The gathering of the information needed to derive a pattern of social communication can be done at the time that the contact center wants to make the response or contact. In this case, the social media gateway can "pull" historical communication entries from the user's known social channels. In another embodiment, the social media gateway could be keeping a continuous record of social communications. (The record would be useful in formulating an outbound proactive contact strategy.) The calendar data can be used as an overarching determination of availability as a modifier to any communication pattern that shows up from the social channel information.

The pattern of communication may be derived from the historical communication records. The pattern could be as simple as a probability of use based on a tracked frequency of use by hour (or finer resolution if desired), for each social media channel. So, for example, a user's posting patterns might show that they use twitter extensively (N posts in M time) from 7AM to 9AM, and from 4PM to 10PM, and very little during the other hours of the day. It might also show that they occasionally update Facebook during the hours of 9AM to 4PM. As such, if a response or contact is to be made at 10AM, then the response might be more effective through Facebook rather than through Twitter.

Additionally, the system might be able to track the user's approximate response rate based on looking at historical reply information available through conversational dialogs held in Facebook, like comment chains, and Twitter @replyto type social media messages. Using this reply information, the system can improve the likelihood of the users seeing the response by sending the social media message at a time that, historically, the user has responded quickly to comments or social media messages. Such information could also be used as part of a contact strategy for switching to another media. In that case, the reply information may indicate that if the user did not respond within the historic response interval, the contact should be sent by the next most likely social channel.

In addition to tracking what channel to contact a user on right now, the data allows for determining when to reach out to a contact on a particular channel. For example, if the Contact Center wanted to send a response via Twitter, the system can determine when the best time for sending a response over Twitter would be.

With much of the Social Media domain, users have access to too much data and extensive streams of interactions. It is very easy to miss something if the social media message arrived 8 hours ago. The social media message may get lost. Therefore, the methods described here allow the enterprise to take advantage of the user's attention and focus on a particular system at a particular time.

Lastly, the communication patterns can take into account time-of-day, day-of-week, seasonality, etc. Additionally, some social channels have additional information like the location of the user when they posted the entry. These additional attributes could be accommodated in the pattern.

The phrases "at least one", "one or more", and "and/or" are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together.

The term "a" or "an" entity refers to one or more of that entity. As such, the terms "a" (or "an"), "one or more" and "at least one" can be used interchangeably herein. It is also to be noted that the terms "comprising", "including", and "having" can be used interchangeably.

The term "automatic" and variations thereof, as used herein, refers to any process or operation done without material human input when the process or operation is performed. However, a process or operation can be automatic, even though performance of the process or operation uses material or immaterial human input, if the input is received before performance of the process or operation. Human input is deemed to be material if such input influences how the process or operation will be performed. Human input that consents to the performance of the process or operation is not deemed to be "material".

The term "computer-readable medium" as used herein refers to any tangible storage that participates in providing instructions to a processor for execution. Such a medium may take many forms, including but not limited to, non-volatile media, volatile media, and transmission media. Non-volatile media includes, for example, NVRAM, or magnetic or optical disks. Volatile media includes dynamic memory, such as main memory. Common forms of computer-readable media include, for example, a floppy disk, a flexible disk, hard disk, magnetic tape, or any other magnetic medium, magneto-optical medium, a CD-ROM, any other optical medium, punch cards, paper tape, any other physical medium with patterns of holes, a RAM, a PROM, and EPROM, a FLASH-EPROM, a solid state medium like a memory card, any other memory chip or cartridge, or any other medium from which a computer can read. When the computer-readable media is configured as a database, it is to be understood that the database may be any type of database, such as relational, hierarchical, object-oriented, and/or the like. Accordingly, the invention is considered to include a tangible storage medium and prior art-recognized equivalents and successor media, in which the software implementations of the present invention are stored.

The terms "determine", "calculate", and "compute," and variations thereof, as used herein, are used interchangeably and include any type of methodology, process, mathematical operation or technique.

The term "mine" may be any type of or process for searching and/or retrieving data from a data source, regardless of the type or structure of the data source.

The term "module" as used herein refers to any known or later developed hardware, software, firmware, artificial intelligence, fuzzy logic, or combination of hardware and software that is capable of performing the functionality associated with that element. Also, while the invention is described in terms of exemplary embodiments, it should be appreciated that individual aspects of the invention can be separately claimed.

### BRIEF DESCRIPTION OF THE DRAWINGS

The present disclosure is described in conjunction with the appended figures:
Fig. 1 is a block diagram of an embodiment of a communication system, operable to interact with persons using a social media network;
Fig. 2A is a block diagram of an embodiment of a social media gateway;
Fig. 2B is a block diagram of an embodiment of a dialog system;
Fig. 3 is a block diagram of embodiments of a dialog data structure;
Fig. 4 is a flow diagram of an embodiment of a process for creating a dialog data structure for trend analysis;
Figs. 5A and 5B are a flow diagram of an embodiment a process for generating a trend based on social media usage by a user;
Fig. 6 is a flow diagram of an embodiment a process for contacting a social media user based on a trend;
Fig. 7 is a block diagram of an embodiment of a computing environment;
Fig. 8 is a block diagram of an embodiment of a computer system.

In the appended figures, similar components and/or features may have the same reference label. Further, various components of the same type may be distinguished by following the reference label by a letter that distinguishes among the similar components. If only the first reference label is used in the specification, the description is applicable to any one of the similar components having the same first reference label irrespective of the second reference label.

### DETAILED DESCRIPTION

The ensuing description provides embodiments only, and is not intended to limit the scope, applicability, or configuration of the invention. Rather, the ensuing description will provide those skilled in the art with an enabling description for implementing the embodiments. It being understood that various changes may be made in the function and arrangement of elements without departing from the spirit and scope of the invention as set forth in the appended claims.

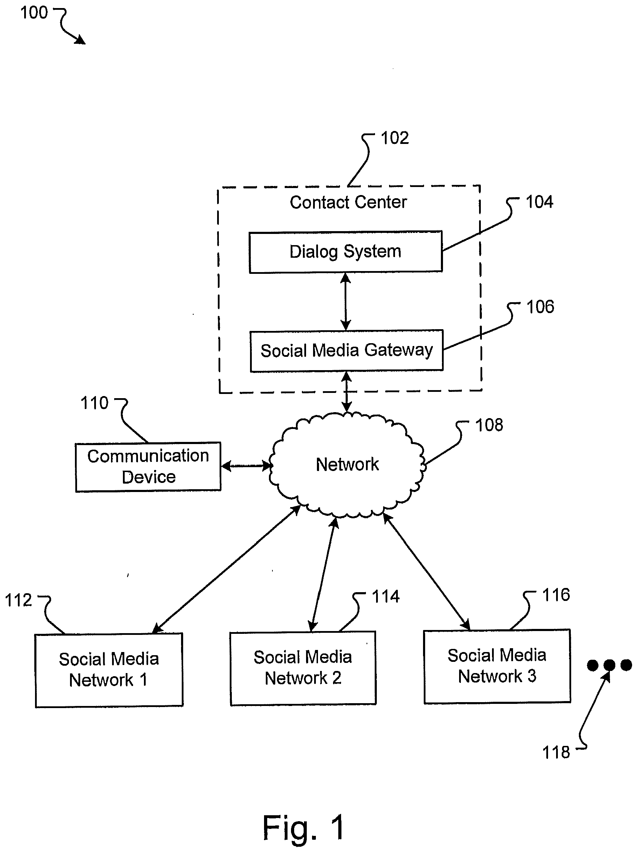

A communication system 100, for interacting with persons using social media is shown in Fig. 1. The communication system 100 can include a contact center 102, a network 108, and one or more types of social media networks or systems, such as social media network 1 112, social media network 2 114, and social media network 3 116. Social media networks 1 112, 2 114, and/or 3 116 can be any social media including, but not limited to, networks, websites, or computer enabled systems. For example, a social media network may be MySpace, Facebook, Twitter, Linked-In, Spoke, or other similar computer enabled systems or websites. The communication system 100 can communicate with more or fewer social media networks 1 112, 2 114, and/or 3 116 than those shown Fig. 1, as represented by ellipses 118.

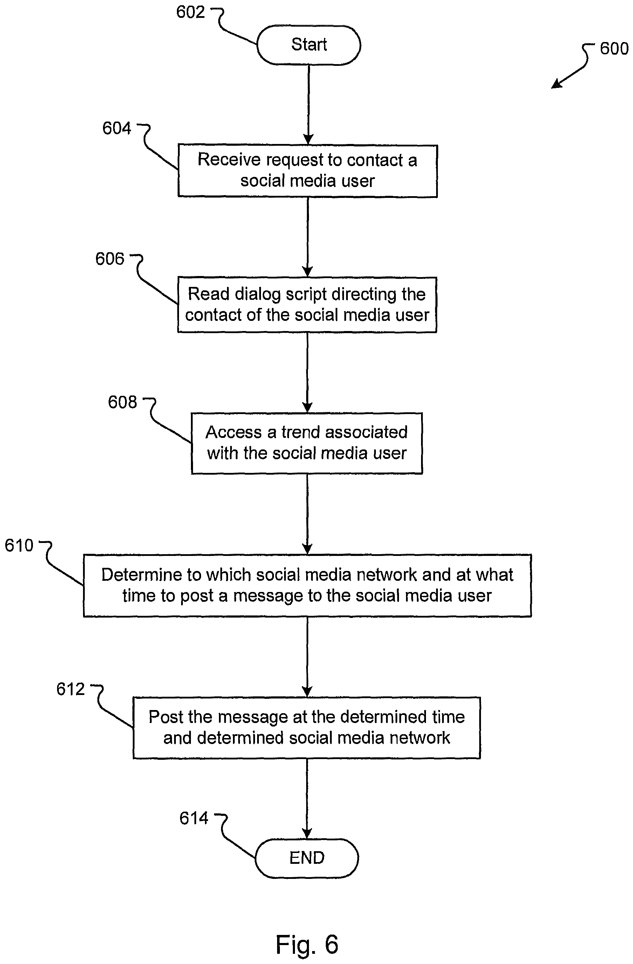

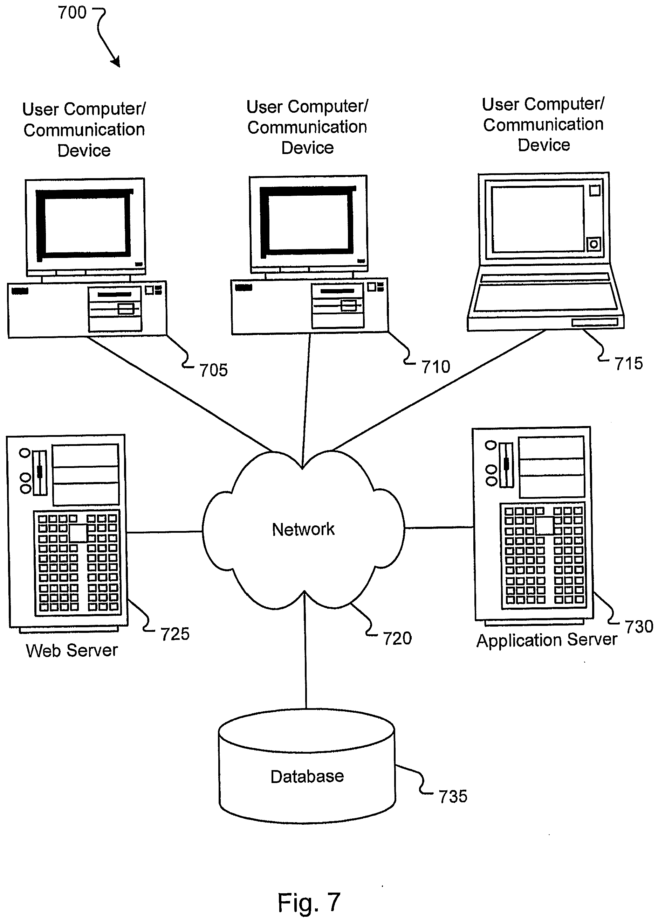

The network 108 can be any network or system operable to allow communication between the contact center 102 and the one or more social media networks 1 112, 2 114, and/or 3 116. The network 108 can represent any communication system, whether wired or wireless, using any protocol and/or format. The network 108 provides communication capability for the contact center 102 to communicate with sites corresponding to the one or more social media networks 1 112, 2 114, and/or 3 116. However, the network 108 can represent two or more networks, where each network is a different communication system using different communication protocols and/or formats and/or different hardware and software. For example, network 108 can be a wide area network, local area network, the Internet, a cellular telephone network, or some other type of communication system. The network may be as described in conjunction with Figs. 6 and 7.

A contact center 102 can be a system that can communicate with one or more persons that use social media networking sites. The contact center 102 can be hardware, software, or a combination of hardware and software. The contact center 102 can be executed by one or more servers or computer systems, as described in conjunction with Figs. 6 and 7. The contact center 102 can include all systems, whether hardware or software, that allow the contact center 102 to receive, service, and respond to directed contacts. For example the contact center 102 can include the telephone or email system, the interface to human agents, systems to allow human agents to service and respond to received contacts, and one or more systems operable to analyze and improve the function of agent interaction.

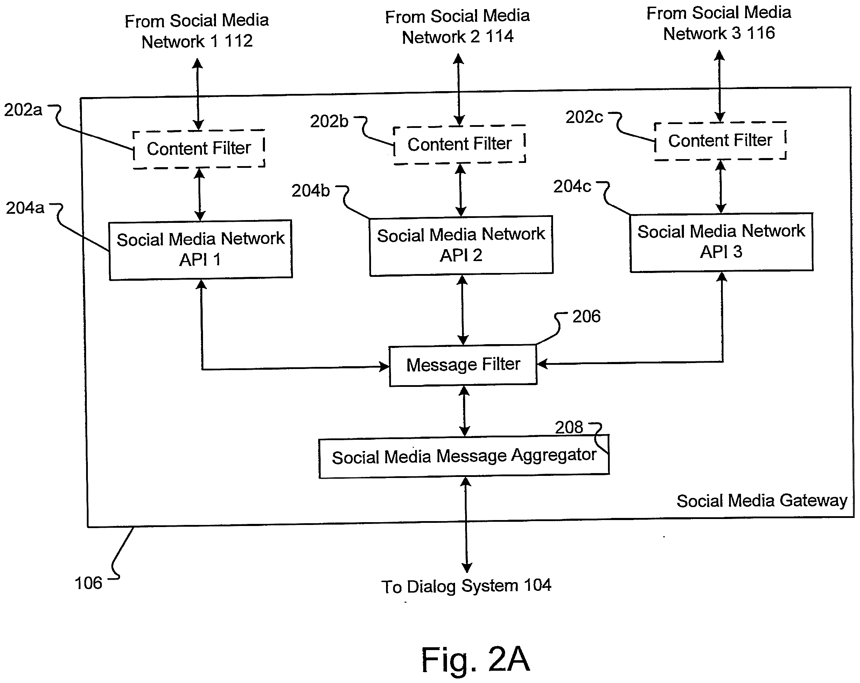

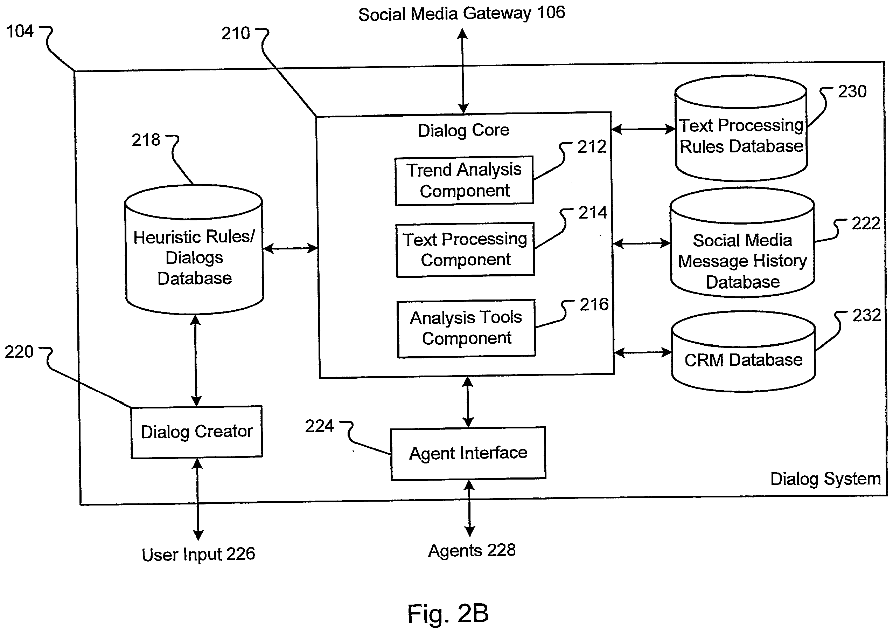

The contact center 102 may include a dialog system 104 and a social media gateway 106. While the dialog system 104 and the social media gateway 106 are shown as being a part of the contact system 102, in other embodiments, the dialog system 104 and/or the social media gateway 106 are separate systems or functions executed separately from the contact center 102 and/or executed by a third party. The dialog system 104 may process and receive social media messages. The social media gateway 106 can receive and translate social media messages from the one or more social media networks 1 112, 2 114, and/or 3 116. An embodiment of the dialog system 104 is described in conjunction with Fig. 2B. An embodiment of the social media gateway 106 is described in conjunction with Fig. 2A.

The contact center 102 may also communicate with one or more communication devices 110. The communication devices 110 can represent a customer's or user's cell phone, email system, personal digital assistant, laptop computer, or other device that allows the contact center 102 to interact with the customer. The contact center 102 can modify a non-direct contact, from a social media network 1 112, 2 114, and/or 3 116, into a directed contact by sending a response social media message directly to a customer's communication device 110.

An embodiment of the social media gateway 106 is shown in Fig. 2A. The social media gateway 106 can include one or more components which may include hardware, software, or combination of hardware and software. The social media gateway 106 can be executed by a computer system such as those in conjunction with Figs. 6 and 7. However, in other embodiments, the components described in conjunction with Fig. 2A are logic circuits or other specially-designed hardware that are embodied in a field programmable gate array (FPGA).

Herein, the social media gateway 106 can include one or more content filters 202a, 202b, and/or 202c. A content filter 202 can receive all of the social media messages for the contact center 102 from a social media network 1 112, 2 114, and/or 3 116 and eliminate or delete those social media messages that do not require a response. For example, a social media message between two friends on a Facebook page, if not pertaining to a product or a service of the company operating the contact center 102, may not need a response. As such, the content filter 202 can filter out or delete that non-suitable social media message from the social media messages that are received by social media network application programming interface (API) 1 204a, social media network API 2 204b, and/or social media network API 3 204c. With the content filter 202, the social media network API 204 only needs to translate those social media messages that should be received by the dialog system 104. Translation typically requires the conversion of the social media message into a different format.

The content filter 202 is provided with one or more heuristics for filter rules from a filter database (not shown). These filter rules can be created by the external customer or internal user (e.g. agent or administrator) of the communication system 100. Thus, the user or customer of the communication system 100 can customize the filtering of social media messages from social media networks 1 112, 2 114, and/or 3 116. Further, different rules may be applied to different social media networks, as some social media networks may have different types of social media messages or postings than other types of social media networks.

While the content filter 202 is shown as part of the social media gateway 106, it is to be appreciated that the content filter 202 may be a part of the social media network API 204. The content filter 202 may correspond to the query terms used by the social media network API 204. The content filter 202 or query terms are an argument to the social media network API 204 call. The social media network API 204 can be an application that the social media network 1 112, 2 114, and/or 3 116 provides to access the site. Thus, the social media network API 204 is called and connects the social media gateway 106 to the social media network 1 112, 2 114, and/or 3 116. Any suitable filter criteria may be employed. Examples include content of source, address field, destination or recipient address fields, time stamp field, subject matter field, and social media message body field. For example, an obvious searchable content is the name of the business enterprise running the contact center 102 and/or products or services of the enterprises.

The social media gateway 106 can include one or more social media network API 204. As shown in Fig. 2A, the social media gateway 106 may include a social media network API 204 for each social media network 1 112, 2 114, and/or 3 116. As such, the social media gateway 106 can interact with each social media network 1 112, 2 114, and/or 3 116 in the particular (often unique) format or protocol used by the social media network 1 112, 2 114, and/or 3 116. Further, when new social media networks are created, the social media gateway 106 can easily be expanded to interact with those social media networks by adding another social media network API 204. Where social media networks 112 are more standardized, or use substantially similar formats or protocols, a single social media network API can be shared by multiple such social media networks 112-116.

The social media network API 204 can receive social media messages from and send social media messages corresponding to the social media network 1 112, 2 114, and/or 3 116. The social media network API 204 can translate a social media message received from a social media network 1 112, 2 114, and/or 3 116 and send the translated social media message to a social media message filter 206. The social media network API 204 can translate the received social media message into a standard formatted file. For example, the translated social media message may be represented by an extensible mark-up language (XML) file or other file having a general format. As such, each specific and particular social media network social media message can be translated into a standard format for use by the dialog system 104. Further, the social media network API 204 can receive a generally or standard format response social media message, from the dialog system 104 and translate that response into a particularly or specifically formatted response social media message that can be posted to the corresponding social media network 1 112, 2 114, and/or 3 116.

Social media messages to the contact center 102 are addressed to the contact center 102. For example, a customer may become a "friend" of the contact center 102 on a social media network 114, such as Facebook. The customer may then address a social media message to the contact center 102 on Facebook. This non-direct contact is a social media message that is not sent directly to the contact center 102 but to the contact center's Facebook page. In other embodiments, the contact center 102 receives social media messages not addressed to the contact center 102. For example, the contact center 102 can receive tweets from Twitter that are "broadcast" rather than addressed to the contact center 102. The contact center 102 may also search for social media message or content on the social media network 1 112, 2 114, and/or 3 116. Exemplary search criteria include customer name, customer profession, customer home address, customer business address, customer employer name, customer educational or professional background, customer hobby, personal or business interests, customer family profile, and the like. Thus, the social media gateway 106 of the contact center 102 can query, gather, or connect to a live feed of data from a social media network 1 112, 2 114, and/or 3 116 and then apply a filter to the indirect information.

The translated social media messages from the social media network API 204 can be received by a social media message filter 206. A social media message filter 206 can perform some or all of the functions of the content filter 202 and eliminate social media messages before being sent to the dialog system 104. However, in other embodiments, the social media message filter 206 eliminates information from within the social media messages before the trimmed social media messages are sent to the dialog system 104. For example, a social media message from a social media network 112 may have three or four interactions between two parties not associated with the contact center 102. Only one of the several postings may be pertinent to the dialog system 104. As such, the social media message filter 206 can eliminate or delete at least a portion of the other social media messages for the dialog system 104. Thus, the dialog system 104 receives a social media message where some of the content of the social media message has been deleted. The social media message filter 206 can retrieve heuristics or filter rules from a filter database (not shown), similar to the content filter 202. A substantial difference between the content and social media message filters 202 and 206 is that the content filter 202 is specific to a particular social media message format associated with a corresponding social media network 112-116, while the social media message filter 206 is applied to a standardized or universal format and is therefore common to multiple social media networks 112-116. One skilled in the art will understand the type of rules that may be used to filter information from social media messages such that only pertinent questions, facts, requests, or information is sent to the dialog system 104.

A social media message aggregator 208 may also be included with the social media gateway 106. A social media message aggregator 208 can, in contrast to the social media message filter 206, combine two or more social media messages into a packet or grouping that is sent to the dialog system 104. Therefore, the social media message aggregator 208 can inter-relate or combine social media messages based on different information within the social media messages. For example, two social media messages may be combined based on any of the social media message fields referenced above, such as the person that posted the social media message, the subject, the request or question asked, the person the social media message was sent to, or other information that may be pertinent to the dialog system 104. Thus, the dialog system 104 may be able to respond concurrently to two or more social media messages based on a grouping provided by the social media message aggregator 208. If the social media messages are aggregated or not aggregated, each social media message can be sent from the social media gateway 106 to the dialog system 104.

The social media gateway 106 can also send responses back to the social media networks 1 112, 2 114, and/or 3 116. A response from an agent in the contact center 102 can be sent to the social media gateway 106. The response may be in a general format and translated. The translated response may then be posted to the appropriate social media network 1 112, 2 114, and/or 3 116 by the social media gateway 106. In other embodiments, the agent may post the response directly to the social media network 1 112, 2 114, and/or 3 116 without sending the response to the social media gateway 106.

An embodiment of the dialog system 104 is shown in Fig. 2B. The dialog system 104 can include one or more components which may hardware, software, or combination of hardware and software. The dialog system 104 can be executed by a computer system such as those described in conjunction with Figs. 6 and 7. However, in other embodiments, the components described in conjunction with Fig. 2B, are logic circuits or other specially-designed hardware that are embodied in a field programmable gate array (FPGA) or application specific integrated circuit (ASIC). The components contained within the dialog system 104 can include a dialog core 210 that is communication with a social media message history database 222, an agent interface 224, and a heuristic rules and dialogs database 218. Further, the heuristic rules and dialogs database 218 can be in communication with a dialog creator 220.

The dialog core 210 can include one or more sub-components. For example, the dialog core 210 includes a trend analysis component 212, a text processing component 214, and an analysis tools component 216. These components, similar to the components for the dialog system 104, can be hardware, software, or combination of hardware and software. The dialog core 210 steps through the states of a dialog data structure. A dialog is a set of inputs and associated actions that can be taken which allow for the automatic and structured response to social media requests or social media messages. For example, if a user asks for a manual, the input of the text word "manual" can cause the dialog system 104 to send information about one or more manuals. In turn, the receiver of the response may respond, in kind, with the selection of a certain user manual. In which case, the dialog data structure may then automatically send the user to a website where the user can retrieve an electronic version of the manual. As such, the dialog data structure allows the dialog core 210 to automate the interaction between the contact center 102 and a person. This automation eliminates the need for agent involvement, in some situations, and makes the contact center 102 more efficient and more effective. Further, the automation expands the contact center's ability to answer numerous social media messages from the plethora of postings on the numerous social media networks 1 112, 2 114, and/or 3 116.

The dialog creator 220 will create a dialog data structure 300 that steps through various states for each social media message that comes into the contact center 102. The first step might be to send the social media message to the trend analysis component 212, then to the text processing component 214, and then execute a query of a Customer Relationship Management (CRM) system and a CRM database 232 (to find out if this user has an existing order). A CRM database 232 can store information about customers or other data related to customer relations. Finally the dialog data structure might decide that the social media message should be sent to a human agent 228 for processing. The states or node transitions are in the dialog core 210 and make use of many different components that the dialog creator 220 combines in any way the user desires to handle the social media messages. The dialog core 210 can make use of the trend analysis component 212, text processing component 214, or other systems. The dialog core 210 may also interface with a CRM system and/or CRM database 232, external databases, social media user information (e.g., followers, friends, post history, etc. from the social media site), or other systems.

The trend analysis component 212 is operable to analyze trends that occur between two or more social media messages received by the social media networks 1 112, 2 114, and/or 3 116. The two social media messages can be from different social media networks, so that the trend analysis component 212 can identify trends across several different social media networks 1 112, 2 114, and/or 3 116. Trends can include multiple occurrences of the same word or phrase, multiple occurrences of a customer identity, product name or service, or multiple occurrences of some other information that might indicate a trend. Further, the trend analysis component 212 may be able to identify escalations in the occurrences of particular text, or identities, or other information, or may identify multiple occurrences over a period of time. The trend analysis component 212 may also be able to apply one or more different algorithms to occurrences of information within the social media networks. For example, the trend analysis component 212 can match the number of occurrences of a phrase or word over a period of time and apply analysis to determine if the occurrences are increasing or decreasing over the period of time.

The text processing component 214 is operable to analyze text of one or more social media messages from social media networks 1 112, 2 114, or 3 116. Some possible methods for text processing can include Regular Expression, Latent Semantic Indexing (LSI), text part of speech tagging, text clustering, N-Gram document analysis, etc. In addition, for possibly longer documents, (such as, blogs or emails), the text processing component 214 may execute one or more methods of document summarization. The summarization may occur if the social media message will be sent an agent 228 of the contact center 102; the summarization can reduce the amount of information that the agent may manage. The text processing rules or models may be stored in and/or retrieved from a text processing rules database 230. The text processing rules database 230 can be a database as described in conjunction with Figs. 6 and 7 that stores rules or models used by the text processing component 214.

The text processing component 214 can identify one or more occurrences of a particular text, such as using one or more of the social media message fields referenced above, in order to associate that social media message with one or more dialogs data structures in the heuristic rules and dialog database 218. For example, the text processing component can look for the word "manual," in the social media message. If the word "manual" is found, the text processing component 214 may retrieve a dialog from the heuristic rules and dialogs database 218, which communicates with the customer about one or more owner's manuals, repair manuals, or other types of manuals. In another example, if the social media message includes the words, "buy", "sell", "price, "discount" or other types of words that may indicate the user or customer wishes to buy a product, the text processing component 214 can retrieve one or more dialogs from the heuristic rules and dialogs database 218 that can assist the customer in purchasing products or services from the enterprise.

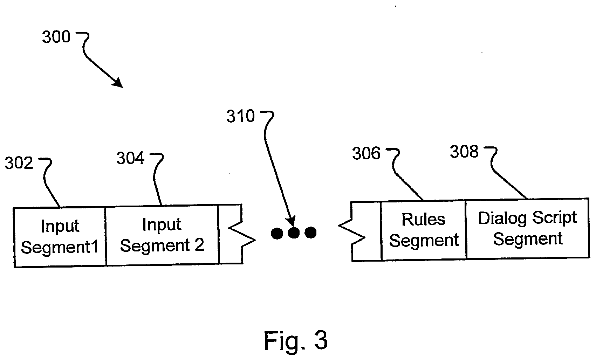

The analysis tools component 216 is operable to analyze response social media messages received back from an agent interface 224. In analyzing the agent's responses, the analysis tools component 216 can determine if the dialog data structures 300 (Fig. 3) originally retrieved by the text processing component 214 met the needs of the customer. In the analysis, the agent may enter one or more items of information, for the analysis tools component 216, about the response and about how the response matched with the dialog data structures 300. The analysis tools component 216 can review the response and determine if it was similar to the response provided by the dialog data structure 300. Thus, the analysis tools component 216 can provide information to the dialog core 210 or the dialog creator 220 to improve the dialog data structures 300 (Fig. 3) that are included in the heuristic rules and dialogs database 218.

The social media message history database 222 can be any database or data storage system as described in conjunction with Figs. 6 and 7. Thus, the social media message history database 222 can store data in data fields, objects, or other data structures to allow other systems to retrieve that information at a later time. The social media message history database 222 can store previous social media messages or information about previous social media messages. Thus, for example, if the trend analysis component 212 is analyzing several social media messages over a period of time, the trend analysis component 212 can retrieve information about previous social media messages associated with the current analysis from the social media message history database 222. As such, the trend analysis component 212 can better detect trends occurring at the social media networks 1 112, 2 114, and/or 3 116. The data stored by the message history database 222 can include the entire social media message or only a portion of the social media message, and in some circumstances, include metadata about the social media message(s).

The heuristic rules and dialogs database 218 can be any type of database or data storage system as described in conjunction with Figs. 6 and 7. The heuristic rules and dialogs database 218 can store information and data fields, data objects, and/or any other data structures. An example of information stored within the heuristic rules and dialogs database 218 is described in conjunction with Fig. 3. The heuristic rules and dialogs database 218 stores rules and dialogs that automate responses to received social media messages. The dialogs control the interaction between the dialog core 210 and the social media network 1 112, 2 114, and/or 3 116. The dialogs or heuristic rules can be created by a dialog creator 220. Thus, the dialog creator 220 can interface with the user input 226 to receive information about dialogs. The user input 226 is then used to form the states and responses for a dialog.

An agent interface 224 is a communication system operable to send action items to contact center agents, in the contact center 102. An agent can be a person or other system that is operable to respond to certain questions or requests from a customer. For example, the agent can be a person that has specialized expertise in a topic area, such as technical support. The agent interface 224 can format the social message into an action item and forward that social media message to one or more agents 228. The agent interface 224 can also receive response(s) back from the agents 228. The information provided by the agent may be used by the dialog core 210 to complete a response to the social media message. For example, the information may classify the social media message (e.g., sales, service, etc.). In other embodiments, the response is a complete response to the social media message that can be posted to the social media network 1 112, 2 114, and/or 3 116.

An embodiment of a dialog data structure 300 is shown in Fig. 3. The dialog data structure 300 can be stored in several different forms of databases, such as relational databases, flat files, object-oriented databases, etc. Thus, while the term "data field" or "segment" is used, the data may be stored in an object, an attribute of an object, or some other form of data structure. Further, the dialog data structure 300 can be stored, retrieved, sent, or received during the processing of dialogs by the dialog core 210 or the dialog creator 220. The dialog data structure 300 stores one or more items of information in one or more data fields. The numeric identifiers (e.g. 302, 304, etc.) shown in Fig. 3 can identify, in one or more fields or segments, either the data field or segment or the data stored in the data field or segment.

The dialog data structure 300 can include one or more input segments, such as, input segment 1 302 and input segment 2 304, a rules segment 306, and/or a dialog script segment 308. Input segments 302 and 304 each include one or more fields comprising the one or more inputs that may be required to associate a social media message with the dialog data structure 300. The inputs segments 302 and 304 may include a customer identity, a respective customer type, a text word, a phrase, or other information that indicates that the dialog data structure 300 is associated with the social media messages. The input segments 302 and 304 may also include certain trends that the trend analysis component 212 can identify. As such, if a trend is identified and associated with the inputs 302 and/or 304, the dialog data structure 300 can be retrieved and used by the dialog core 210. While there are only two input segments 302 and 304 shown in Fig. 3, there may be more or fewer input segments associated with the dialog data structure 300, as indicated by ellipses 310.

The rules segment 306 can include one or more heuristic rules that either help with the association of the respective dialog data structure 300 with the social media message or control the interaction between the dialog core 210 and the social media customer. For example, the rule 306 can state that the dialog data structure 300 applies only if the social media message includes input segment 1 302 but not input segment 2 304. One skilled in the art will be able to identify other types of rules that may govern the association of the dialog data structure 300 with the social media message. In other embodiments, the rules segment 306 states that if the social media message includes inputs 302 and/or 304, then the dialog core 210 should respond with a certain type of action.

Generally, a dialog script segment 308 includes a script of actions or responses that direct one or more other components, such as the dialog core 210 (Fig. 2B), to conduct the actions or send the responses. The dialog script segment 308 can include the one or more responses required by the dialog core 210. If the dialog script segment 308 applies (that is, if the social media message is requesting a certain type of information), the dialog script segment 308 may include the one or more responses that the dialog core 210 should communicate to respond to that social media message. The dialog script segment 308 can also include a response and a pointer to another dialog script segment 308 or another dialog data structure 300. Further, the dialog script segment 308 may have one or more actions that may be taken by another component after a secondary response is received by a customer. Thus, the dialog script segment 308 can allow an interaction to continue with a social media user over a period of time and several interactions between the user and the contact center 102.

It should be noted that the dialog script segment 308 can reference one or more other dialog data structures 300. Thus, the dialog script segment 308 can direct the dialog core 210 to reference at least one other dialog data structure 300 to further act on the social media message. Further, the social media message can be subject of two or more dialog script segments 308, and direct the dialog core 210 to complete two dialog script segments on the social media message. Also, dialog script segments 308 may not be associated with a response but direct the dialog core 210 to complete other actions, such as populating databases or gathering information.

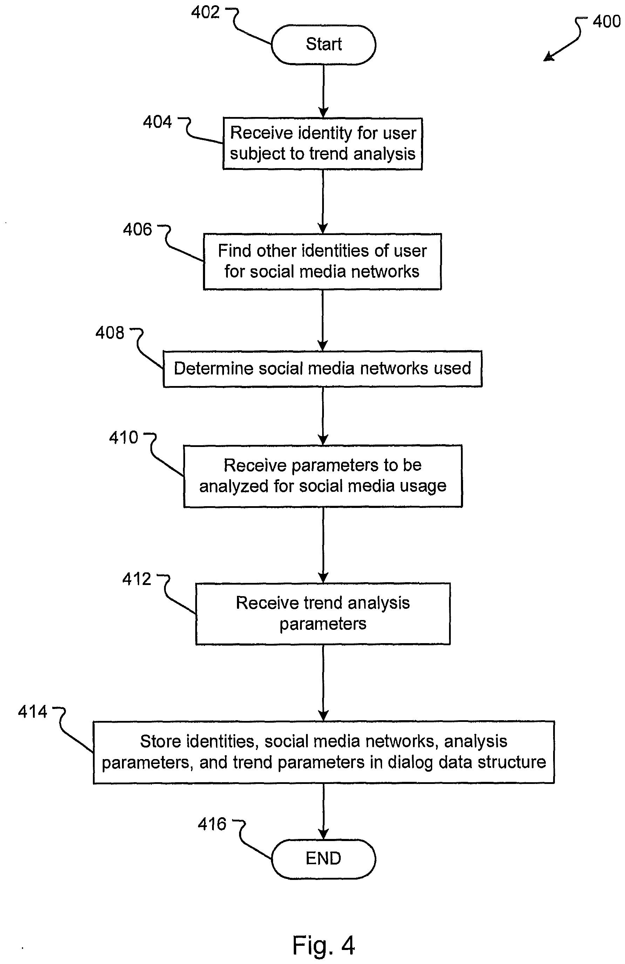

An embodiment of a method 400 for creating a data dialog structure 300 for trend analysis is shown in Fig. 4. Generally, the method 400 begins with a start operation 402 and terminates with an end operation 418. While a general order for the steps of the method 400 are shown in Fig. 4, the method 400 can include more or fewer steps or arrange the order of the steps differently than those shown in Fig. 4, The method 400 can be executed as a set of computer-executable instructions executed by a computer system and encoded or stored on a computer readable medium. Hereinafter, the method 400 shall be explained with reference to the systems, components, modules, software, data structures, etc. described in conjunction with Figs. 1-3.

The contact center 102 receives an identity for a user subject to trend analysis, in step 404. The dialog creator 220 can receive the identity from user input 226. The identity may be a user name that the user uses for a social media network 112, the name of the user, an address, or some other identifying information. From this information, the dialog creator 220 may access one or more other sources to find other identities for the user that are used on social media networks, in step 406. For example, the dialog creator 220 can access the CRM database 232 or the message history database 222 to locate identities that are associated with the received identity, in step 404. In other embodiments, the dialog creator 220 may access social media network 1 112, 2 114 and/or 3 116 to find other identities for the user.

From the identities, either received or located in step 404 or 406, the dialog creator 220 may then determine what social media networks 1 112, 2 114, or 3 116 are used by the user in step 408. For example, the identity received may be a Twitter username, in which case, the dialog creator 220 may determine that Twitter is used by this user.

The dialog creator 220 can then receive parameters related to social media usage that are to be analyzed, in step 410. The dialog creator 220 may receive further user input 226 that includes parameters related to social media usage. For example, the parameters may include when the social media message was posted, on which social media network the social media message was posted, what day of the week the social media message was posted, the date of the posting, where the user was located when the post was made, and other information that are associated with the social media messages. These parameters are often included metadata about the social media messages and can be extracted from the social media networks 1 112, 2 114 or 3 116 or included in the received social media messages. There may be other parameters that are received that need to be analyzed as one skilled in the art will understand.

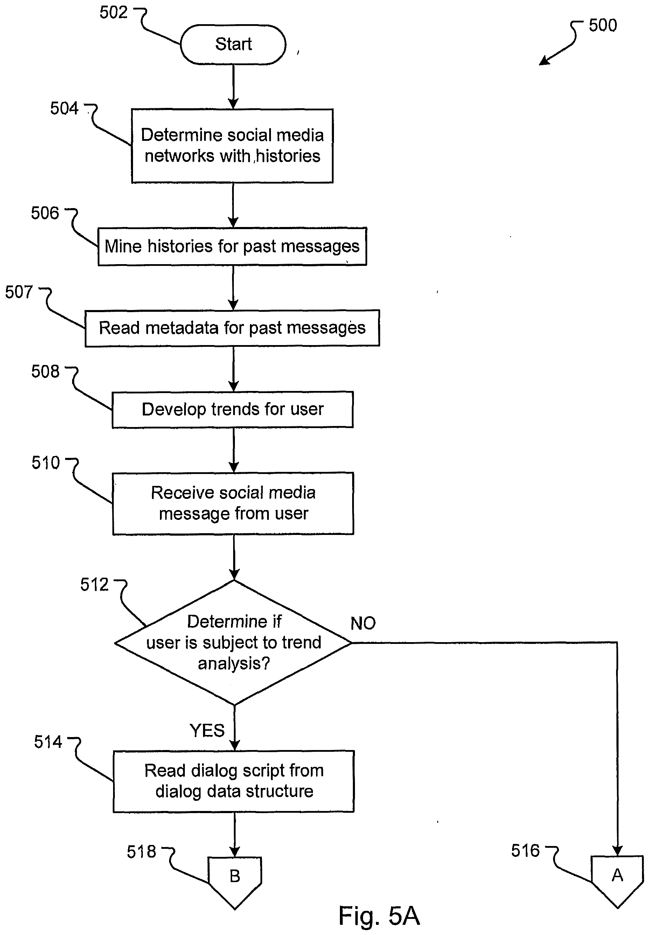

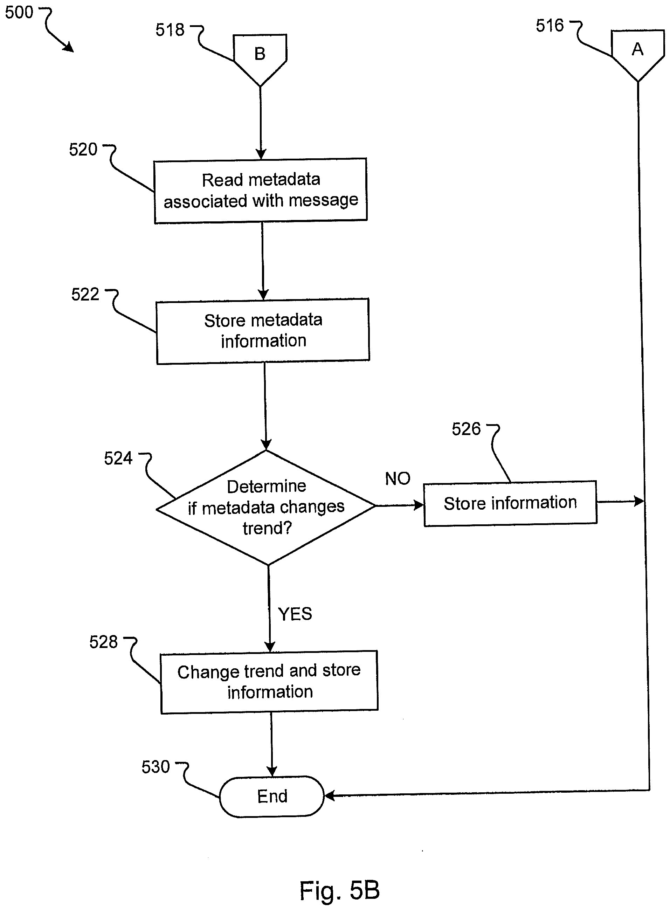

An embodiment of a method 500 for conducting a trend analysis of social media usage by a user is shown in Fig. 5. Generally, the method 500 begins with a start operation 502 and terminates with an end operation 516. While a general order for the steps of the method 500 are shown in Fig. 5, the method 500 can include more or fewer steps or arrange the order of the steps differently than those shown in Fig. 5. The method 500 can be executed as a set of computer-executable instructions executed by a computer system and encoded or stored on a computer readable medium. Hereinafter, the method 500 shall be explained with reference to the systems, components, modules, software, data structures, etc. described in conjunction with Figs. 1-3.

The dialog creator 220 may receive further user input that includes the trend analysis parameters, in step 412. Trend analysis parameters are parameters that are associated with how the trend analysis should be conducted. For example, these trend analysis parameters can include how long the user is to be evaluated for trend analysis, how to store or retrieve the parameters provided in step 410, and other information that will modify the conduct of the dialog system 104 in determining trends for the user.

All of the information received in user input 226 or determined from user input 226 is then stored in a dialog data structure, in step 414. Thus, the dialog creator 220 creates a dialog data structure 300 for the different information. The dialog creator 220 can store user identities in input segment 1 302, input segment 304 or one or more other input segments. The parameters for social media messages that are received in step 410 may be stored in a dialog script segment 308. The social media networks used by the user may also be stored in dialog script segment 308. The received trend analysis parameters provided in step 412 can be stored in rules segments 306, which will define how the dialog data structure 300 is used, or may also be stored in the dialog script segment 308. After storing the different parameters, identities, social media networks and other information to the dialog data structure 300, the dialog creator 220 can store the dialog data structure 300 and heuristic rules and dialogs database 218 for use by the dialog core 210 for trend analysis.

The dialog core 210 can receive the dialog data structure 300 that was created for trend analysis. The dialog core 210 can then extract the dialog script segment 308 and which will direct the actions of the dialog core 210. The dialog script store in the dialog script segment 308 can direct the trend analysis component 212 of the dialog core 210 to determine which social media networks include message posting histories. For example, Facebook includes past postings for the user in a posting history that is included on the Facebook page of the user. The trend analysis component 212 determines the one or more social media networks with histories to which the user posts messages, in step 504.

The trend analysis component 212 may then mine the histories in the social media networks 1 112, 2 114 and/or 3 116 for past messages, in 506. The trend analysis component 212 communicates through a social media network API 204 to social media network 112, 114 and/or 116. The social media message histories are read and retrieved by the trend analysis component 212.

The metadata included in each of the past messages in the histories may then be read by the trend analysis component 212, in step 507. Metadata can include any information about the posting. For example, metadata can be the date and time of the post, where the user was when the message was posted, and other information about the posting. In some embodiments, the text processing component 214 may analyze the messages. The text analysis can include analysis to determine the mood or demeanor of the message postings. Thus, the text processing component 214 can provide a conception of mood for the user when posting a message. The text processing component 214 may also analyze responses either by the user to other posts or by other social media users to the user's post. As such, the text processing component 214 is able to determine an influence factor or amount of influence that the user can exert on people when posting messages on social media network(s) 1 112, 2 114 and/or 3 116.

From the metadata and other text processing, the trend analysis component 212 can develop one or more trends for user activity on social media networks 1 112, 2 114, and/or 3 116, in step 508. Trends can include when the user posts messages to each of the different social media networks 1 112, 2 114, 3 116, where the user generally is when posting messages, how often the user responds to certain postings on social media networks 1 112, 2 114, 3 116, the influence of the user when posting messages, and other trends that may develop in the user's posting history. The trends may be stored in either the social media message history database 222 or the CRM database 232. The dialog core 210 may also store the metadata or the postings themselves in the CRM database 232 or the message history database 222 for future analysis.

In embodiments, the user's posting may be continually evaluated to modify or improve the trends generated from the social media message histories. Thus, the trend analysis component 212 may analyze future social media messages when the social media user posts the social media messages to a social media network 1 112, 2 114, 3 116. Therefore, the social media gateway 106 can receive a social media message from a user, in step 510. The social media network API 204 can receive the social media message from social media network 1 112, 2 114 and/or 3 116 and process the message to provide the social media message to the dialog core 210. The text processing component 214 can analyze the message to determine the identity of the user that posted the social media message. If a user identity from the social media message is located in input segment 302 and/or 304 of a dialog data structure 300 stored in the heuristic rules and dialogs database 218 and associated with that trend analysis campaign, the text processing component 214 can determine that the user is subject to the trend analysis, in step 512. Thus, if the user identity is in input segment 302 or 304, step 512 proceeds "YES" to step 514. If the user identity is not in one of the input segments 302 or 304 the step 512 proceeds "NO" through off-page connect 516 to the end operation 530.

In step 514, the text processing component 214 can read a dialog script in a dialog script segment 308 from, the located dialog data structure 300. The dialog script provides information needed to direct the trend analysis component 212 in analyzing the social media user message. The process then flows through off-page connector 518 to Fig. 5B. The dialog script can direct a trend analysis component 212 to read metadata associated with the received message, in step 520. The metadata may include the time, date and location for a user associated with the message posting. Text processing component 214 may also analyze the tenor the message or the text of the message to determine the influence of the message. The replies to the message may also be retrieved and analyzed or the messages in which the user is replying to may also be analyzed.

The metadata extracted from the message or messages related to the received message are stored as metadata information, in step 522. The trend analysis component 212 may store the metadata in the message history database 222 or the CRM database 232. For example, if the user is provided a profile in the CRM database 232, the metadata may be attached to the profile in the CRM database 232. After storing the metadata information, the trend analysis component 212 may determine if the metadata changes any stored trend, in step 524. As such, the trend analysis component 212 may retrieve the trends stored in the CRM database 232 or social media message history database 222 and the information that created the trends. After retrieving the trends, the trend analysis component 212 can apply the new metadata to the data already stored and determine if a trend has changed. If a trend has changed, in step 524 flows "YES" to step 528. If no trend has changed, the step 524 flows "NO" to store information 526. The metadata stored in step 522 may instead be stored in step 526. In other embodiments, the modified trends with the new information may be stored in step 526. In step 528, the trends are changed and the new trends and metadata information are stored in step 58. As such, the trend analysis component 212 changes the trends and stores the trends and metadata in the social media message history database 222 or the CRM database 232. In this way, as the user provides new messages, trends may be reanalyzed and changed as necessary. Thus, this reiterative process continually improves the trending of user interaction with social media networks 1 112, 2 114, 3 116.

The information in the trends can then be used by enterprises to contact the user better. For example, if the trends show that the user typically is on Facebook from 3 to 4 pm every Monday, then messages can be posted to the user's Facebook page at 3 pm with the hope that the user is likely to be on Facebook and see the message at that time. The trending improves and makes the contact center system 102 more efficient in contacting the social media users on social media networks 1 112, 2 114, 3 116.

An embodiment of a method 600 for conducting a trend analysis of social media usage by a user is shown in Fig. 6. Generally, the method 600 begins with a start operation 602 and terminates with an end operation 614. While a general order for the steps of the method 600 are shown in Fig. 6, the method 600 can include more or fewer steps or arrange the order of the steps differently than those shown in Fig. 6. The method 600 can be executed as a set of computer-executable instructions executed by a computer system and encoded or stored on a computer readable medium. Hereinafter, the method 600 shall be explained with reference to the systems, components, modules, software, data structures, etc. described in conjunction with Figs. 1-3.

A dialog system 104 receives a request to contact a social media user, in step 604. The request may be user input 228 or other input from an enterprise. The input may provide the name or identity of one or more social media users. An identity can be any information that may identify the social media user, for example, a name, a social media network username, a telephone number, an address, etc. From the provided identity, the dialog core 210 can find and retrieve one or more other identities for the social media user from the CRM database 232 or other sources.

The dialog system 104 may then locate a dialog data structure 300 that is associated with the social media user. The dialog system 104 can search for a dialog data structure 300 stored in the heuristic rules and dialogs database 218. To locate the dialog data structure 300, the dialog system 210 may match the one or more identities received or determined with an identity of the social media user stored in input segment 1 302 or input segment 2 304. When a match is found, the dialog system 210 can retrieve the dialog data structure. Then, the text processing component 214 of the dialog system can read dialog script 308 that directs the contact of the social media user, in step 606.

The dialog script 308 can direct the text processing component 214 to determine a best time and social media network to use for the contact. To determine this information, the text processing component 214 may request trend information from the trend analysis component 212. The trend analysis component may access a trend associated with the social media user from the CRM database 232 or the social media message history database 222, in step 608.

As explained in conjunction with Fig. 5, the trend is developed from previous postings by the social media user. The trend can describe a likelihood that the social media user is active on a social media network at the determined time. This likelihood can be a mathematical function. For example, the likelihood can be represented as a percentage (e.g., the social media user posts 50% of all messages on Facebook between the times of 8:00 a.m. and 10:00 a.m.). Other mathematical functions or expressions can be used to represent the trend, as one skilled in the art will understand. The determined time can be a range of times, for example, 8:00 a.m. to 10:00 a.m., where the posting may be made at any time during or immediately before the range of times. Further, the trend can provide two or more times when and/or two or more social media networks where the social media user is likely to be active.

The trend analysis component 212 can determine to which social media network and at what time to post a message to the social media user, in step 610. The trend analysis component 212 interprets the trend to determine where and when to post the message. For example, if the greatest likelihood is that the user will be active on Twitter from 4:00 p.m. to 5:00 p.m., the trend analysis component 212 will determine that Twitter and the range of times from 4:00 p.m. to 5:00 p.m. is when the social media message to the social media user should be posted.

The determination of social media network and time is sent from the trend analysis component 212 to the text processing component 214. The text processing component 214 from the message according to the dialog script 308. Then, the text processing component 214 can post the message at the determined time and determined social media network, in step 612. The text processing component 214 may send the message to the social media gateway 106 for posting, and the social media gateway posts the message at the most likely time for the social media user to be active on the social media network. As such, the contact center 102 provides a system where contacts to social media users is most effective because messages are posted when and on the social media network where the user is most likely to be active and see the message.

Figure 7 illustrates a block diagram of a computing environment 700 that may function as servers, computers, or other systems provided herein. The environment 700 includes one or more user computers 705, 710, and 715. The user computers 705, 710, and 715 may be general purpose personal computers (including, merely by way of example, personal computers, and/or laptop computers running various versions of Microsoft Corp.'s Windows™ and/or Apple Corp.'s Macintosh™ operating systems) and/or workstation computers running any of a variety of commercially-available UNIX™ or UNIX-like operating systems. These user computers 705, 710, 715 may also have any of a variety of applications, including for example, database client and/or server applications, and web browser applications. Alternatively, the user computers 705, 710, and 715 may be any other electronic device, such as a thin-client computer, Internet-enabled mobile telephone, and/or personal digital assistant, capable of communicating via a network 720 and/or displaying and navigating web pages or other types of electronic documents. Although the exemplary computer environment 700 is shown with three user computers, any number of user computers may be supported.

Environment 700 further includes a network 720. The network 720 may can be any type of network familiar to those skilled in the art that can support data communications using any of a variety of commercially-available protocols, including without limitation SIP, TCP/IP, SNA, IPX, AppleTalk, and the like. Merely by way of example, the network 720 maybe a local area network ("LAN"), such as an Ethernet network, a Token-Ring network and/or the like; a wide-area network; a virtual network, including without limitation a virtual private network ("VPN"); the Internet; an intranet; an extranet; a public switched telephone network ("PSTN"); an infra-red network; a wireless network (e.g., a network operating under any of the IEEE 802.11 suite of protocols, the Bluetooth™ protocol known in the art, and/or any other wireless protocol); and/or any combination of these and/or other networks.

The system may also include one or more server 725, 730. In this example, server 725 is shown as a web server and server 730 is shown as an application server. The web server 725, which may be used to process requests for web pages or other electronic documents from user computers 705, 710, and 715. The web server 725 can be running an operating system including any of those discussed above, as well as any commercially-available server operating systems. The web server 725 can also run a variety of server applications, including SIP servers, HTTP servers, FTP servers, CGI servers, database servers, Java servers, and the like. In some instances, the web server 725 may publish operations available operations as one or more web services.

The environment 700 may also include one or more file and or/application servers 730, which can, in addition to an operating system, include one or more applications accessible by a client running on one or more of the user computers 705, 710, 715. The server(s) 730 and/ or 725 may be one or more general purpose computers capable of executing programs or scripts in response to the user computers 705, 710 and 715. As one example, the server 730, 725 may execute one or more web applications. The web application may be implemented as one or more scripts or programs written in any programming language, such as Java™, C, C#™, or C++, and/or any scripting language, such as Perl, Python, or TCL, as well as combinations of any programming/scripting languages. The application server(s) 730 may also include database servers, including without limitation those commercially available from Oracle, Microsoft, Sybase™, IBM™ and the like, which can process requests from database clients running on a user computer 705.

The web pages created by the server 725 may be forwarded to a user computer 705 via a web (file) server 725. Similarly, the web server 725 may be able to receive web page requests, web services invocations, and/or input data from a user computer 705 and can forward the web page requests and/or input data to the server 730. In further embodiments, the server 730 may function as a file server. Although for ease of description, Fig. 7 illustrates a separate web server 725 and file/application server 730, those skilled in the art will recognize that the functions described with respect to servers 725, 730 may be performed by a single server and/or a plurality of specialized servers, depending on implementation-specific needs and parameters. The computer systems 705, 710, and 715, web (file) server 725 and/or web (application) server 730 may function as the system, devices, or components described in Figs. 1-3.

The environment 700 may also include a database 735. The database 735 may reside in a variety of locations. By way of example, database 735 may reside on a storage medium local to (and/or resident in) one or more of the computers 705, 710, 715, 725, 730. Alternatively, it may be remote from any or all of the computers 705, 710, 715, 725, 730, and in communication (*e.g.,* via the network 720) with one or more of these. The database 735 may reside in a storage-area network ("SAN") familiar to those skilled in the art. Similarly, any necessary files for performing the functions attributed to the computers 705, 710, 715, 725, 730 may be stored locally on the respective computer and/or remotely, as appropriate. The database 735 may be a relational database, such as Oracle 10i™, that is adapted to store, update, and retrieve data in response to SQL-formatted commands.

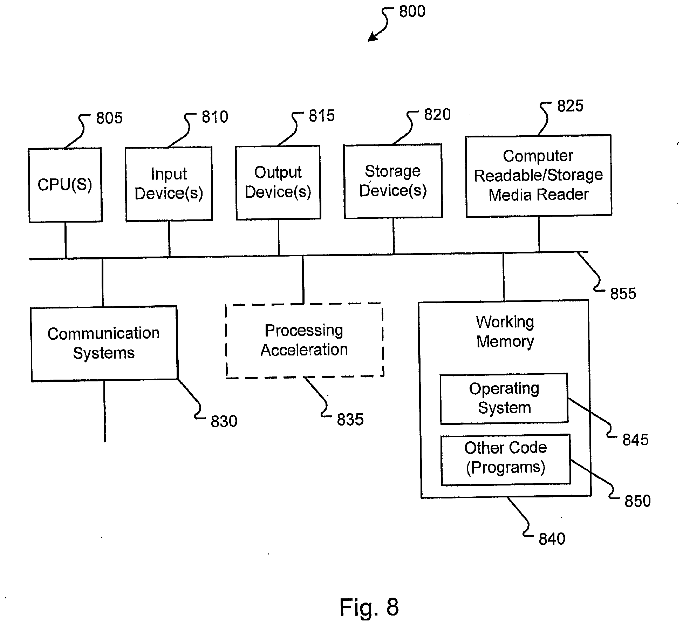

Figure 8 illustrates one embodiment of a computer system 800 upon which the servers, computers, or other systems or components described herein may be deployed or executed. The computer system 800 is shown comprising hardware elements that may be electrically coupled via a bus 855. The hardware elements may include one or more central processing units (CPUs) 805; one or more input devices 810 (e.g., a mouse, a keyboard, etc.); and one or more output devices 815 (e.g., a display device, a printer, etc.). The computer system 800 may also include one or more storage devices 820. By way of example, storage device(s) 820 may be disk drives, optical storage devices, solid-state storage devices such as a random access memory ("RAM") and/or a read-only memory ("ROM"), which can be programmable, flash-updateable and/or the like.

The computer system 800 may additionally include a computer-readable storage media reader 825; a communications system 830 (e.g., a modem, a network card (wireless or wired), an infra-red communication device, etc.); and working memory 840, which may include RAM and ROM devices as described above. The computer system 800 may also include a processing acceleration unit 835, which can include a DSP, a special-purpose processor, and/or the like.

The computer-readable storage media reader 825 can further be connected to a computer-readable storage medium, together (and, optionally, in combination with storage device(s) 820) comprehensively representing remote, local, fixed, and/or removable storage devices plus storage media for temporarily and/or more permanently containing computer-readable information. The communications system 830 may permit data to be exchanged with the network 820 (Fig. 8) and/or any other computer described above with respect to the computer system 800. Moreover, as disclosed herein, the term "storage medium" may represent one or more devices for storing data, including read only memory (ROM), random access memory (RAM), magnetic RAM, core memory, magnetic disk storage mediums, optical storage mediums, flash memory devices and/or other machine readable mediums for storing information.

The computer system 800 may also comprise software elements, shown as being currently located within a working memory 840, including an operating system 845 and/or other code 850. It should be appreciated that alternate embodiments of a computer system 800 may have numerous variations from that described above. For example, customized hardware might also be used and/or particular elements might be implemented in hardware, software (including portable software, such as applets), or both. Further, connection to other computing devices such as network input/output devices may be employed.

In the foregoing description, for the purposes of illustration, methods were described in a particular order. It should be appreciated that in alternate embodiments, the methods may be performed in a different order than that described. It should also be appreciated that the methods described above may be performed by hardware components or may be embodied in sequences of machine-executable instructions, which may be used to cause a machine, such as a general-purpose or special-purpose processor or logic circuits programmed with the instructions to perform the methods. These machine-executable instructions may be stored on one or more machine readable mediums, such as CD-ROMs or other type of optical disks, floppy diskettes, ROMs, RAMs, EPROMs, EEPROMs, magnetic or optical cards, flash memory, or other types of machine-readable mediums suitable for storing electronic instructions. Alternatively, the methods may be performed by a combination of hardware and software.

Specific details were given in the description to provide a thorough understanding of the embodiments. However, it will be understood by one of ordinary skill in the art that the embodiments may be practiced without these specific details. For example, circuits may be shown in block diagrams in order not to obscure the embodiments in unnecessary detail. In other instances, well-known circuits, processes, algorithms, structures, and techniques may be shown without unnecessary detail in order to avoid obscuring the embodiments.

Also, it is noted that the embodiments were described as a process which is depicted as a flowchart, a flow diagram, a data flow diagram, a structure diagram, or a block diagram. Although a flowchart may describe the operations as a sequential process, many of the operations can be performed in parallel or concurrently. In addition, the order of the operations may be re-arranged. A process is terminated when its operations are completed, but could have additional steps not included in the figure. A process may correspond to a method, a function, a procedure, a subroutine, a subprogram, etc. When a process corresponds to a function, its termination corresponds to a return of the function to the calling function or the main function.

Furthermore, embodiments may be implemented by hardware, software, firmware, middleware, microcode, hardware description languages, or any combination thereof. When implemented in software, firmware, middleware or microcode, the program code or code segments to perform the necessary tasks may be stored in a machine readable medium such as storage medium. A processor(s) may perform the necessary tasks. A code segment may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

While illustrative embodiments of the invention have been described in detail herein, it is to be understood that the inventive concepts may be otherwise variously embodied and employed, and that the appended claims are intended to be construed to include such variations, except as limited by the prior art.

## Claims

1. A method comprising:
a processor, in a contact center, receiving a request to contact a user of a social media network (112);
the processor reading a dialog script (308) that directs the contacting of the user of social media network (112);
the processor accessing a trend for a user of the social media network (112), wherein the trend describes a likely usage of the social media network (112);
the processor determining, from the trend, to which social media network (112) to post a message to the user of the of social media network (112) and at what time to post the message on the social media network (112); and
the processor posting the message to the determined social media network (112) at the determined time.

2. The method as defined in claim 1, wherein the trend is developed based on metadata that relates to at least one of a group consisting of a time when a past social media message was posted, the social media network (112) where a past social media message was posted, a date when the past social media message was posted, a location for the user when the past social media message was posted, a tenor of the past social media message, a tenor of a response to the past social media message, and a tenor of a social media message to which the past social media message was responding.

3. The method as defined in claim 1, further comprising:
the processor receiving a new social media message from a social media network (112), wherein the new social media message is posted by the user;
the processor determining if the user is subject to trend analysis;
if the user is subject to trend analysis, the processor reading new metadata from the new social media message; and
the processor storing the new metadata with metadata from a social media message history.

4. The method as defined in claim 3, further comprising:
the processor determining if the new metadata changes the trend;
if the new metadata changes the trend, the processor changing the trend; and
5 the processor storing the changed trend.

5. The method as defined in claim 3, further comprising, in response to determining if the user is subject to trend analysis and before reading the new metadata, the processor reading the dialog script (308) from a dialog data structure to direct the reading of the new metadata from the new social media message and the storing of the new metadata.

6. The method as defined in claim 1, wherein the processor is directed by the dialog script (308) to determine a social media network (112) having a social media message history, mine the social media message history, read the metadata, and develop the trend.

7. The method as defined in claim 1, further comprising:
the processor receiving an identity for the user subject to a trend analysis;
the processor finding another identity for the user for a social media network (112);
the processor determining the one or more social media networks (112) used by the user;
the processor receiving a parameter related to a social media message that are to be analyzed in the trend analysis;
the processor receiving a trend analysis parameter; and
the processor storing the received identity, the other found identity, the social media networks (112), the parameter related to a social media message, and the trend analysis parameter in a dialog data structure.

8. The method as defined in claim 7, wherein the dialog data structure includes the dialog script (308) that directs the trend analysis.

## Patentansprüche

1. Verfahren, umfassend:
Empfangen einer Anforderung, einen Benutzer eines Social-Media-Netzwerks (112) zu kontaktieren, durch einen Prozessor in einem Kontaktzentrum;
Lesen eines Dialogskripts (308), das das Kontaktieren des Benutzers des Social-Media-Netzwerks (112) steuert, durch den Prozessor;
Zugreifen auf einen Trend für einen Benutzer des Social-Media-Netzwerks (112) durch den Prozessor, wobei der Trend eine wahrscheinliche Nutzung des Social-Media-Netzwerks (112) beschreibt;
Bestimmen aus dem Trend durch den Prozessor, in welchem Social-Media-Netzwerk (112) eine Nachricht an den Benutzer des Social-Media-Netzwerks (112) gepostet werden soll und zu welcher Zeit die Nachricht in dem Social-Media-Netzwerk (112) gepostet werden soll; und
Posten der Nachricht an das bestimmte Social-Media-Netzwerk (112) zu der bestimmten Zeit durch den Prozessor.

2. Verfahren nach Anspruch 1, wobei der Trend auf der Basis von Metadaten entwickelt wird, die sich auf mindestens eine Gruppe beziehen, die aus einer Zeit, zu der eine frühere Social-Media-Nachricht gepostet wurde, dem Social-Media-Netzwerk (112), in dem eine frühere Social-Media-Nachricht gepostet wurde, einem Datum, zu dem die frühere Social-Media-Nachricht gepostet wurde, einem Standort für den Benutzer, als die frühere Social-Media-Nachricht gepostet wurde, einem grundlegenden Inhalt der früheren Social-Media-Nachricht, einem grundlegenden Inhalt einer Antwort auf die frühere Social-Media-Nachricht und einem grundlegenden Inhalt einer Social-Media-Nachricht, auf die die frühere Social-Media-Nachricht antwortete, besteht.

3. Verfahren nach Anspruch 1, weiterhin umfassend:
Empfangen einer neuen Social-Media-Nachricht von einem Social-Media-Netzwerk (112) durch den Prozessor, wobei die neue Social-Media-Nachricht von dem Benutzer gepostet wird;
Bestimmen durch den Prozessor, ob der Benutzer einer Trendanalyse unterzogen wird;
wenn der Benutzer einer Trendanalyse unterzogen wird, Lesen von neuen Metadaten aus der neuen Social-Media-Nachricht durch den Prozessor und
Speichern der neuen Metadaten mit Metadaten aus einer Social-Media-Nachrichtenhistorie.

4. Verfahren nach Anspruch 3, weiterhin umfassend:
Bestimmen durch den Prozessor, ob die neuen Metadaten den Trend ändern;
wenn die neuen Metadaten den Trend ändern, Ändern des Trends durch den Prozessor und
Speichern des geänderten Trends durch den Prozessor.

5. Verfahren nach Anspruch 3, weiterhin umfassend als Reaktion auf das Bestimmen, ob der Benutzer einer Trendanalyse unterzogen wird, und vor dem Lesen der neuen Metadaten das Lesen des Dialogskripts (308) aus einer Dialogdatenstruktur durch den Prozessor, um das Lesen der neuen Metadaten aus der neuen Social-Media-Nachricht und das Speichern der neuen Metadaten zu steuern.

6. Verfahren nach Anspruch 1, wobei der Prozessor durch das Dialogskript (308) gesteuert wird, um ein Social-Media-Netzwerk (112) mit einer Social-Media-Nachrichtenhistorie zu bestimmen, die Social-Media-Nachrichtenhistorie auszuwerten, die Metadaten zu lesen und den Trend zu entwickeln.

7. Verfahren nach Anspruch 1, weiterhin umfassend:
Empfangen einer Identität für den Benutzer, der einer Trendanalyse unterzogen wird, durch den Prozessor;
Finden einer anderen Identität für den Benutzer für ein Social-Media-Netzwerk (112) durch den Prozessor;
Bestimmen des einen oder der mehreren Social-Media-Netzwerke (112), die von dem Benutzer verwendet werden, durch den Prozessor;
Empfangen eines Parameters in Bezug auf eine Social-Media-Nachricht, die in der Trendanalyse analysiert werden soll, durch den Prozessor;
Empfangen eines Trendanalyseparameters durch den Prozessor und
Speichern der empfangenen Identität, der anderen gefundenen Identität, der Social-Media-Netzwerke (112), des Parameters in Bezug auf eine Social-Media-Nachricht und des Trendanalyseparameters in einer Dialogdatenstruktur durch den Prozessor.

8. Verfahren nach Anspruch 7, wobei die Dialogdatenstruktur das Dialogskript (308) beinhaltet, das die Trendanalyse steuert.

## Revendications

1. Procédé comprenant :
un processeur, dans un centre de contacts, qui reçoit une demande de contacter un utilisateur d'un réseau multimédia (112) ;
le processeur lit un script de dialogue (308) qui oriente la prise de contact de l'utilisateur du réseau multimédia (112) ;
le processeur accède à une tendance correspondant à un utilisateur du réseau multimédia (112), dans lequel la tendance décrit un usage probable du réseau multimédia (112) ;
le processeur détermine, à partir de la tendance, à quel réseau multimédia (112) poster un message à l'utilisateur du réseau multimédia (112) et à quelle heure poster le message sur le réseau multimédia (112) ; et
le processeur poste le message au réseau multimédia déterminé (112) à l'heure déterminée.

2. Procédé selon la revendication 1, dans lequel la tendance est développée d'après la métadonnée qui a trait à au moins une métadonnée d'un groupe regroupant une heure à laquelle a été posté un message multimédia antérieur, le réseau multimédia (112) où a été posté un message multimédia antérieur, une date à laquelle a été posté le message multimédia antérieur, un emplacement pour l'utilisateur indiquant quand a été posté le message multimédia antérieur, la teneur du message multimédia antérieur, la teneur d'une réponse donnée au message multimédia antérieur, et la teneur d'un message multimédia auquel répondait le message multimédia antérieur.

3. Procédé selon la revendication 1, comprenant en outre :
le processeur qui reçoit un nouveau message multimédia d'un réseau multimédia (112), dans lequel le nouveau message multimédia est posté par l'utilisateur ;
le processeur qui détermine si l'utilisateur fait l'objet d'une analyse des tendances ;
si l'utilisateur fait l'objet d'une analyse des tendances, le processeur qui lit une nouvelle métadonnée du message multimédia ; et
le processeur qui stocke la nouvelle métadonnée avec la métadonnée d'un message multimédia à caractère historique.

4. Procédé selon la revendication 3, comprenant en outre :
le processeur qui détermine si la nouvelle métadonnée modifie la tendance ;
si la nouvelle métadonnée modifie la tendance, le processeur modifie la tendance ; et le processeur stocke la tendance modifiée.

5. Procédé selon le revendication 3, comprenant en outre, en réponse au fait de déterminer si l'utilisateur fait l'objet d'une analyse des tendances, et avant de lire la nouvelle métadonnée, le processeur lit le script de dialogue (308) d'une structure de données de dialogue pour orienter la lecture de la nouvelle métadonnée du nouveau message multimédia ainsi que le stockage de la nouvelle métadonnée.

6. Procédé selon la revendication 1, dans lequel le processeur est orienté par le script de dialogue (308) pour déterminer un réseau multimédia (112) comportant un message multimédia à caractère historique, pour extraire le message multimédia à caractère historique, pour lire les métadonnées et pour développer la tendance.

7. Procédé selon la revendication 1, comprenant en outre :
le processeur qui reçoit une identité pour l'utilisateur faisant l'objet d'une analyse des tendance ;
le processeur qui trouve une nouvelle identité pour l'utilisateur du réseau multimédia (112) ;
le processeur qui détermine le réseau ou plusieurs réseaux multimédia (112) utilisé(s) par l'utilisateur ;
le processeur qui reçoit un paramètre associé à un message multimédia, qui est analysé dans l'analyse des tendances ;
le processeur qui reçoit un paramètre d'analyse des tendances ; et
le processeur qui stocke l'identité reçue, l'autre identité trouvée, le réseau multimédia (112), le paramètre associé à un message multimédia, et le paramètre d'analyse des tendances dans une structure de données de dialogue.

8. Procédé selon la revendication 7, dans lequel la structure de données de dialogue inclut le script de dialogue (308) qui oriente l'analyse des tendances.
